# EUROPEAN PATENT APPLICATION

(11) **EP 4 525 389 A1**
(43) Date of publication of application: **19.03.2025**
(21) Application number: 23842013.7
(22) Date of filing: 26.06.2023
(51) Int. Cl.: H04L 41/0823

(54) **TRANSMISSION OPTIMIZATION METHOD, AND DEVICE, CONTROLLER AND READABLE STORAGE MEDIUM**

(30) Priority: 18.07.2022 CN 202210841034
(71) Applicant: ZTE Corporation, Shenzhen, Guangdong 518057 (CN)
(72) Inventor: MA, Weiwei, Shenzhen, Guangdong 518057 (CN)
(74) Representative: Savi, Massimiliano
(86) International application number: PCT/CN2023/102436
(87) International publication number: WO 2024/016947

(57) **Abstract**

Disclosed in the present disclosure are a transmission optimization method, and a device, a controller and a readable storage medium. The transmission optimization method comprises: acquiring a user configuration file, and parsing the user configuration file to obtain a user configuration requirement (S200); generating a plurality of resource pools according to the user configuration requirement, wherein each resource pool is set with a corresponding weight parameter (S210); according to the user configuration requirement, setting a network port priority corresponding to each peripheral network port (S220); and connecting each peripheral network port to a target resource pool according to the user configuration requirement, wherein the weight parameters of target resource pools correspond to the network port priorities of the peripheral network ports on a one-to-one basis (S230).

## Description

### CROSS-REFERENCE TO RELATED APPLICATION

The present disclosure is filed on the basis of Chinese patent application No. 202210841034.8 filed July 18, 2022, and claims priority of the Chinese patent application, the content of which is incorporated herein by reference in its entirety.

### TECHNICAL FIELD

The present disclosure relates to the technical field of data transmission, and particularly relates to a transmission optimization method, a device, a controller and a readable storage medium.

### BACKGROUND

Deterministic network technology is the development direction of the new generation of network communication systems, and is an important driving force for industries such as networking, manufacturing, agriculture, and services. Establishing a technological and industrial landscape of "Deterministic Network +" is crucial for various sectors to advance further towards high-quality development characterized by digitization, networking, and intelligence. Especially with the rapid development of Industrial Internet of Things (IIOT), the interconnection between different devices and the concurrent execution of various services raises greater demands for Quality of Service (QoS). Data transmission in traditional industrial field-level devices is dependent on QoS transmission, which employs traffic classification principles to categorize traffic into multiple priorities or service classes. After packet classification, other QoS characteristics can be applied to the different classifications. Industrial products typically provide four or more Ethernet ports, allowing different networks to connect to various industrial devices or terminals. Each terminal or industrial device has distinct QoS requirements based on the nature of the service. Traditional QoS services can only prioritize certain network services, resulting in inefficient data transmission and a lack of accurate control over transmission time and latency.

### SUMMARY

The present disclosure provides a transmission optimization method, a device, a controller and a readable storage medium.

In accordance with a first aspect of the present disclosure, an embodiment provides a transmission optimization method which is applied by a transmission device, the transmission device includes a plurality of peripheral network ports, and the method includes: acquiring and parsing a user configuration file to obtain user configuration requirements; generating a plurality of resource pools according to the user configuration requirements, where each resource pool is assigned a corresponding weight parameter; set a network port priority corresponding to each of the peripheral network ports according to the user configuration requirements; and connect each of the peripheral network ports to a target resource pool according to the user configuration requirements, such that the weight parameters of the target resource pools are in one-to-one correspondence with the network port priorities of the peripheral network ports.

In accordance with a second aspect of the present disclosure, an embodiment further provides a transmission device, including: a network manager module configured to acquire and parse a user configuration file to obtain user configuration requirements; and a network input/output (IO) manager module configured to generate a plurality of resource pools according to the user configuration requirements, where each resource pool is assigned a corresponding weight parameter; set a network port priority corresponding to each of the peripheral network ports according to the user configuration requirements; and connect each of the peripheral network ports to a target resource pool according to the user configuration requirements, such that the weight parameters of the target resource pools are in one-to-one correspondence with the network port priorities of the peripheral network ports.

In accordance with a third aspect of the present disclosure, an embodiment further provides a controller, including: a memory, a processor, and a computer program stored in the memory and operable on the processor, and the processor, when executing the computer program, implements the transmission optimization method as described in the first aspect.

In accordance with a fourth aspect of the present disclosure, an embodiment further provides a computer-readable storage medium, storing computer-executable instructions configured to cause a computer to implement the transmission optimization method as described in the first aspect.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are provided for a further understanding of the technical schemes of the present disclosure and constitute a part of the description. The accompanying drawings are used to explain the technical schemes of the present disclosure in conjunction with the embodiments of the present disclosure, and not intended to constitute a restriction on the technical schemes of the present disclosure.
FIG. 1 is a schematic diagram of a system architecture platform for implementing a transmission optimization method according to an embodiment of the present disclosure;
FIG. 2 is a flowchart of a transmission optimization method according to an embodiment of the present disclosure;
FIG. 3 is a flowchart of sub-steps of a transmission optimization method according to another embodiment of the present disclosure;
FIG. 4 is a flowchart of sub-steps of a transmission optimization method according to another embodiment of the present disclosure;
FIG. 5 is a flowchart of sub-steps of a transmission optimization method according to another embodiment of the present disclosure;
FIG. 6 is a flowchart of sub-steps of a transmission optimization method according to another embodiment of the present disclosure;
FIG. 7 is a schematic diagram of a transmission device according to another embodiment of the present disclosure;
FIG. 8 is a schematic diagram of a transmission device according to another embodiment of the present disclosure;
FIG. 9 is a schematic diagram of a network IO manager module according to an embodiment of the present disclosure; and
FIG. 10 is an overall flowchart of a transmission optimization method according to another embodiment of the present disclosure.

### DETAILED DESCRIPTION

Various embodiments of the present disclosure will be discussed in detail below. Examples of the embodiments are illustrated in the accompanying drawings, where the same or like reference numerals throughout the figures indicates the same or like elements having the same or like functions. The embodiments described below by referring to the drawings are exemplary, only for explaining the present disclosure, and cannot be understood as limiting the present disclosure.

In the description of the present disclosure, it should be understood that, descriptions relating to orientation, for example, orientation or positional relationships indicated by up, down, front, rear, left, right, etc. are based on the orientation or positional relationships shown in the accompanying drawings, and are to facilitate the description of the present disclosure and simplify the description only, rather than indicating or implying that the device or element referred to must have a specific orientation or be constructed and operated in a specific orientation, and therefore cannot be construed as limiting the present disclosure.

In the description of the present disclosure, the meaning of "several" is one or a plurality; the meaning of "a plurality of" is two or more; "greater than", "less than", "more than", etc. are to be construed as excluding a given figure; and "above", "below", "within", etc. are to be construed as including a given figure. If "first" and "second", etc. are referred to, it is only for the purpose of distinguishing technical features, and shall not be construed as indicating or implying relative importance or implying the number of the indicated technical features or implying the sequence of the indicated technical features.

In the description of the present disclosure, unless otherwise explicitly defined, the terms such as "arrange", "install", and "connect" should be construed in a broad sense, and those having ordinary skill in the art can determine the meanings of the above terms in the present disclosure in a rational way in conjunction with the contents of the technical schemes.

At present, with the rapid development of IIOT, the interconnection between different devices and the concurrent execution of various services raises greater demands for QoS. Data transmission in traditional industrial field-level devices is dependent on QoS transmission, which employs traffic classification principles to categorize traffic into multiple priorities or service classes. After packet classification, other QoS characteristics can be applied to the different classifications. Industrial products typically provide four or more Ethernet ports, allowing different networks to connect to various industrial devices or terminals. Each terminal or industrial device has distinct QoS requirements based on the nature of the service. Traditional QoS services can only prioritize certain network services, resulting in inefficient data transmission and a lack of accurate control over transmission time and latency.

Based on the above circumstances, embodiments of the present disclosure propose a transmission optimization method, a device, a controller and a readable storage medium. The transmission device includes a plurality of peripheral network ports. The transmission device is configured to acquire and parse a user configuration file to obtain user configuration requirements; generate a plurality of resource pools according to the user configuration requirements, where each resource pool is assigned a corresponding weight parameter; set a network port priority corresponding to each of the peripheral network ports according to the user configuration requirements; and connects each of the peripheral network ports to a target resource pool according to the user configuration requirements, such that the weight parameters of the target resource pools are in one-to-one correspondence with the network port priorities of the peripheral network ports. Different devices are connected to the transmission device through different peripheral network ports. Some devices, connected via certain network ports, require more data transmission time and lower latency, while others have less stringent requirements regarding transmission time and latency. Based on user requirements, a user configuration file is generated. By acquiring and parsing the user configuration file, user configuration requirements are obtained, and a plurality of resource pools are generated according to the user configuration requirements. Each resource pool is assigned corresponding weight parameters, i.e., each resource pool has a specific transmission priority, so that higher-priority resource pools have more transmission time and lower latency. Similarly, a network port priority corresponding to each of the peripheral network ports is set according to the user configuration requirements. Each of the peripheral network ports is connected to a target resource pool according to the user configuration requirements, and the weight parameters of the target resource pools are in one-to-one correspondence with the network port priorities. Thus, peripheral network ports corresponding to devices requiring more transmission time and lower latency are connected to higher-priority resource pools, and peripheral network ports corresponding to devices with less demanding requirements are connected to lower-priority resource pools. This approach improves the transmission efficiency, accurately controls the data transmission time and latency, and enhances the user experience.

The embodiments of the present disclosure will be further explained below with reference to the accompanying drawings.

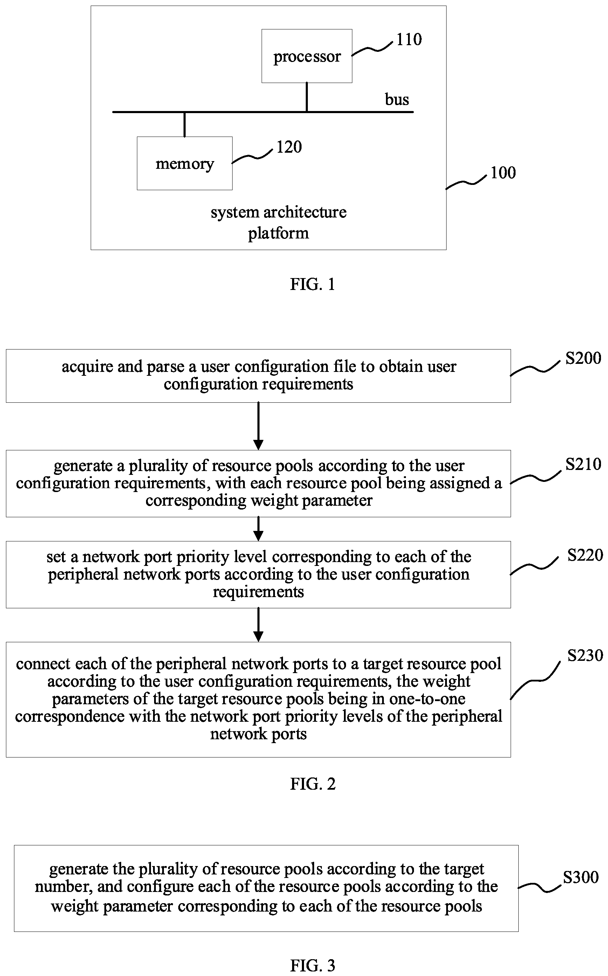

As illustrated in FIG. 1, it is a schematic diagram of a system architecture platform for implementing a transmission optimization method according to an embodiment of the present disclosure.

The system architecture platform 100 in this embodiment of the present disclosure includes one or more processors 110 and a memory 120. FIG. 1 shows an example with a single processor 110 and a single memory 120.

The processor 110 and the memory 120 may be connected by a bus or in other ways. In FIG. 1, the connection is realized by a bus for example.

As a non-transitory computer-readable storage medium, the memory 120 may be configured to store a non-transitory software program and a non-transitory computer-executable program. In addition, the memory 120 may include a high-speed random access memory and a non-transitory memory, for example, at least one magnetic disk storage device, a flash memory device, or another non-transitory solid-state storage device. In some implementations, the memory 120 may include a memory 120 positioned remotely from processor 110. These remote memories may be connected to the system architecture platform 100 via a network. Examples of the above-mentioned network include, but are not limited to, the Internet, an intranet, a local area network, a mobile communication network, and a combination thereof.

It can be understood by those having ordinary skill in the art that the device structure shown in FIG. 1 does not constitute a limitation to the system architecture platform 100, and more or fewer components, or a combination of certain components, or a different component arrangement is possible.

As illustrated in FIG. 2, it is a flowchart of a transmission optimization method according to an embodiment of the present disclosure. The transmission optimization method provided by the embodiment of the present disclosure includes, but not limited to, a step S200, a step S210, a step S220, and a step S230.

At the step S200, a user configuration file is acquired and parsed to obtain user configuration requirements.

At the step S210, a plurality of resource pools are generated according to the user configuration requirements. Each resource pool is assigned a corresponding weight parameter.

At the step S220, a network port priority corresponding to each of the peripheral network ports is set according to the user configuration requirements.

At the step S230, each of the peripheral network ports is connected to a target resource pool according to the user configuration requirements, such that the weight parameters of the target resource pools are in one-to-one correspondence with the network port priorities of the peripheral network ports.

In the embodiments of the present disclosure, the transmission optimization method is applied to a transmission device which includes a plurality of peripheral network ports respectively connected to a plurality of devices. The transmission device is configured to acquire and parse a user configuration file to obtain user configuration requirements. Here, the transmission device includes a network configuration interface in the form of a Website User Interface (WebUI), allowing for network configuration and the generation of the user configuration file. The user configuration file is parsed to obtain the user configuration requirements which include a target number of resource pools, and the transmission device is configured to generate a plurality of resource pools according to the target number. Each resource pool is assigned corresponding weight parameters, i.e., each resource pool has a specific transmission priority. One weight parameter corresponds to one transmission priority. The transmission device is configured to set a network port priority corresponding to each of the peripheral network ports according to the user configuration requirements, and connect each peripheral network port to a target resource pool according to the user configuration requirements. Here, the weight parameters of the target resource pools are in one-to-one correspondence with the network port priorities. Higher-priority peripheral network ports are connected to higher-priority resource pools, and the data of this peripheral network port is stored in the corresponding resource pool. Resource pools with higher priority have more data transmission time and lower latency. Each peripheral network port is connected to a target resource pool according to the network port priority, and the target resource pool has a corresponding transmission priority. Devices requiring more data transmission time and/or lower latency are connected to higher-priority peripheral network ports. This improves the data transmission efficiency, accurately controls the data transmission time and latency, and reduces the situation where lower-priority data use higher-priority channels, causing higher-priority data to wait in queues for transmission, ultimately enhancing the user experience.

In an implementation, the transmission device is configured to acquire and parse a user configuration file to obtain user configuration requirements, and the user configuration requirements indicate that five resource pools need to be generated. In this embodiment, a first resource pool corresponds to a first weight parameter, representing a first transmission priority, which is the highest transmission priority; a second resource pool corresponds to a second weight parameter, representing a second transmission priority; a third resource pool corresponds to a third weight parameter, representing a third transmission priority; a fourth resource pool corresponds to a fourth weight parameter, representing a fourth transmission priority; and a fifth resource pool corresponds to a fifth weight parameter, representing a fifth transmission priority, which is the lowest transmission priority. In addition, network port priorities of five peripheral network ports are specified in the user configuration requirements. In this embodiment, a first peripheral network port corresponds to a first network port priority; a second peripheral network port corresponds to a second network port priority; a third peripheral network port corresponds to a third network port priority; a fourth peripheral network port corresponds to a fourth network port priority; and a fifth peripheral network port corresponds to a fifth network port priority. According to the user configuration requirements, the transmission device connects the first peripheral network port to the first resource pool, the second peripheral network port to the second resource pool, the third peripheral network port to the third resource pool, the fourth peripheral network port to the fourth resource pool, and the fifth peripheral network port to the fifth resource pool. In this way, devices with high demands for transmission time and/or latency can be connected to the first peripheral network port, allowing for data transmission with more transmission time and/or lower latency; and devices having less stringent requirements regarding transmission time and latency can be connected to the fifth peripheral network port.

In another embodiment of the present disclosure, the transmission device has a switch box module for connecting each peripheral network port to a target resource pool. The peripheral network port is connected to the switch box module at first. After the resource pools are generated, each resource pool will also be connected to the switch box module. Based on the network port priority of each peripheral network port, the switch box module connects each peripheral network port to a target resource pool with a corresponding transmission priority. In response to changes in the network port priority of a peripheral network port and/or the transmission priority of a resource pool, the switch box module can quickly re-establish the connection, significantly improving the connection efficiency.

In addition, in the embodiments of the present disclosure, the above user configuration requirements include, but not limited to, a target number of resource pools, that is, number information of the resource pools; a weight parameter corresponding to each resource pool, that is, weight parameter information of the resource pool; and a corresponding relationship between the resource pools and the peripheral network ports, which includes, but not limited to, a network port priority of each peripheral network port, and a connection strategy between the network ports and the resource pools. In the embodiment of the present disclosure, the connection strategy between the network ports and the resource pools is that network ports with higher network port priorities are connected to resource pools with higher transmission priorities, that is, to resource pools having higher weight parameters; and network ports with lower network port priorities are connected to resource pools with lower transmission priorities, that is, to resource pools having lower weight parameters.

In addition, the resource pool includes, but not limited to, a First in First out (FIFO) resource pool.

In addition, the higher-priority resource pool includes, but not limited to, features such as increased transmission time, reduced transmission latency, lower packet loss, and enhanced transmission reliability, which is not limited in the embodiments of the present disclosure.

As illustrated in FIG. 3 it is a flowchart of sub-steps of a transmission optimization method according to another embodiment of the present disclosure. The transmission optimization method provided by the embodiment of the present disclosure includes, but not limited to, a step S300.

At the step S300, the plurality of resource pools are generated according to the target number, and each of the resource pools is configured according to the weight parameter corresponding to each of the resource pools.

In this embodiment of the present disclosure, the transmission optimization method is applied to a transmission device which includes a plurality of peripheral network ports respectively connected to a plurality of devices. In response to the user configuration requirements being not preset configuration requirements, a target number of the resource pools and a weight parameter corresponding to each resource pool are acquired according to the user configuration requirements, and each weight parameter corresponds to a transmission priority. A plurality of resource pools are generated according to the acquired target number, and each resource pool is configured according to the acquired weight parameter corresponding to each resource pool. The transmission device is configured to identify the acquired user configuration requirements, parse the user configuration file in response to the user configuration requirements being not preset configuration requirements, and generate the resource pools according to the user configuration requirements in response to successful parsing.

In an implementation, the preset configuration requirements are to generate three resource pools, the weight parameter of each resource pool is one, and the transmission priority of each resource pool is the first transmission priority. When the user configuration requirements obtained by the transmission device are different from the preset configuration requirements, the user configuration file is parsed. In response to successful parsing, the user configuration requirements are to generate four resource pools. A first resource pool corresponds to a first weight parameter, representing a first transmission priority, which is the highest transmission priority. A second resource pool corresponds to a second weight parameter, representing a second transmission priority. A third resource pool corresponds to a third weight parameter, representing a third transmission priority. A fourth resource pool corresponds to a fourth weight parameter, representing a fourth transmission priority, which is the lowest transmission priority. The first weight parameter is four. The second weight parameter is three. The third weight parameter is two. The fourth weight parameter is one. Thus, four resource pools are generated according to the user configuration requirements, and each resource pool is configured according to the weight parameter corresponding to each resource pool.

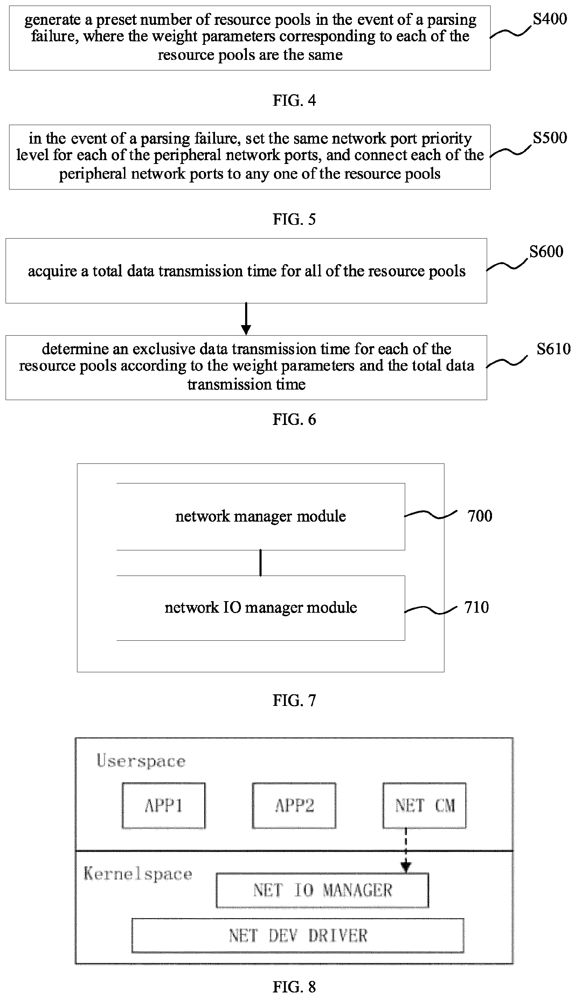

As illustrated in FIG. 4 it is a flowchart of sub-steps of a transmission optimization method according to another embodiment of the present disclosure. The transmission optimization method provided by the embodiment of the present disclosure includes, but not limited to, a step S400.

At the S400, a preset number of resource pools are generated in response to a parsing failure. Here, the weight parameters corresponding to each of the resource pools are identical.

In this embodiment of the present disclosure, the transmission optimization method is applied to a transmission device which includes a plurality of peripheral network ports respectively connected to a plurality of devices. In response to the user configuration requirements being preset configuration requirements, the user configuration file is parsed. In response to a parsing failure, the transmission device is configured to generate a preset number of resource pools, and the weight parameters corresponding to each resource pool are identical, that is, the transmission priorities corresponding to each resource pool are identical. In an implementation, the preset configuration requirements are to generate three resource pools, the weight parameter of each resource pool is one, and the transmission priorities corresponding to each resource pool are identical. When the user configuration requirements obtained by the transmission device are the preset configuration requirements, the user configuration file is parsed. In response to a parsing failure, three resource pools are generated, the weight parameter of each resource pool is one, and the transmission priorities corresponding to each resource pool are identical. In this case, the peripheral network port may connect to any resource pool to achieve identical data transmission performance.

As illustrated in FIG. 5, it is a flowchart of sub-steps of a transmission optimization method according to another embodiment of the present disclosure. The transmission optimization method provided by the embodiment of the present disclosure includes, but not limited to, a step S500.

At the step S500, in response to a parsing failure, the network port priority for each of the peripheral network ports is set to be identical, and each of the peripheral network ports is connected to any one of the resource pools.

In this embodiment of the present disclosure, the transmission optimization method is applied to a transmission device which includes a plurality of peripheral network ports respectively connected to a plurality of devices. In response to the user configuration requirements being preset configuration requirements, the user configuration file is parsed. In response to a parsing failure, identical network port priority is set for each of the peripheral network ports, and each of the peripheral network ports is connected to any one of the resource pools. In an implementation, in response to the user configuration requirements being preset configuration requirements, the user configuration file is parsed. In response to a parsing failure, the network port priority corresponding to each peripheral network port is set according to the preset user requirements, the network port priorities corresponding to each peripheral network port are identical, and each peripheral network port is connected to any resource pool.

As illustrated in FIG. 6 it is a flowchart of sub-steps of a transmission optimization method according to another embodiment of the present disclosure. The transmission optimization method provided by the embodiment of the present disclosure includes, but not limited to, a step S600 and a step S610.

At the step S600, a total data transmission time for all of the resource pools is acquired.

At the step S610, an exclusive data transmission time for each of the resource pools is determined according to the weight parameters and the total data transmission time.

In this embodiment of the present disclosure, the transmission optimization method is applied to a transmission device which includes a plurality of peripheral network ports respectively connected to a plurality of devices. The transmission device is configured to acquire a total data transmission time for all of the resource pools, acquire the corresponding weight parameter of each resource pool according to the user configuration requirements, and determines an exclusive data transmission time for each of the resource pools according to the weight parameters and the total data transmission time. Resource pools with higher weight parameters have a higher transmission priority. During data transmission, these resource pools have more exclusive data transmission time, i.e., devices which correspond to the peripheral network ports connected to these resource pools can achieve data transmission with more transmission time and/or lower latency, thereby improving the data transmission efficiency and accurately controlling the data transmission time and latency.

In an implementation, a time slice, that is, the total data transmission time, is the basic resource and 1 s (1000 ms) is the basic subdivision unit. In an example with four resource pools, there are four transmission priorities in total, and the weight corresponding to each priority is defined as n. Thus, the time slice within 1 s can be calculated as: T (ms) = 1000 * n/10. Assuming that the transmission priorities corresponding to the first resource pool to the fourth resource pool are sequentially the first transmission priority to the fourth transmission priority, and the weights corresponding to the first transmission priority to the fourth transmission priority are sequentially 4, 3, 2, and 1, therefore, the exclusive time slices, namely the exclusive data transmission time, for each resource pool within a basic time cycle of 1000 s are as follows: 1000 * 4/10 = 400 ms for the first resource pool; 1000 * 3/10 = 300 ms for the second resource pool; 1000 * 2/10 = 200 ms for the third resource pool; and 1000 * 1/10 = 100 ms for the fourth resource pool. It is essential to ensure the exclusive time efficiency of each resource pool to guarantee the timely implementation of priority scheduling for corresponding peripheral network ports. This means that higher-priority resource pools have more exclusive data transmission time, and peripheral network ports with higher network port priorities are connected to these higher-priority resource pools, thereby improving the data transmission efficiency and accurately controlling the data transmission time and latency.

Further, in response to the first transmission priority corresponding to the first resource pool being greater than the second transmission priority corresponding to the second resource pool, a first exclusive data transmission time corresponding to the first resource pool is longer than a second exclusive data transmission time corresponding to the second resource pool, and the first resource pool has better transmission performance than that of the second resource pool.

As illustrated in FIG. 7, it is a schematic diagram of a transmission device according to another embodiment of the present disclosure.

In this embodiment of the present disclosure, the transmission device includes a network manager module 700 and a network IO manager module 710 connected to the network manager module 700. The network manager module 700 is configured to acquire and parse a user configuration file to obtain user configuration requirements. The network IO manager module 710 is configured to generate a plurality of resource pools according to the user configuration requirements, where each resource pool is assigned a corresponding weight parameter; set a network port priority corresponding to each of the peripheral network ports according to the user configuration requirements; and connect each of the peripheral network ports to a target resource pool according to the user configuration requirements, such that the weight parameters of the target resource pools are in one-to-one correspondence with the network port priorities of the peripheral network ports.

As illustrated in FIG. 8, it is a schematic diagram of a transmission device according to another embodiment of the present. In another embodiment of the present disclosure, the transmission device consists of three parts: a NET CM module (network manager module), a NET IO MANAGER module (network IO manager module) and a NET DEV DRIVER module (network device driver module). Here, the NET DEV DRIVER module, which handles a kernel space of an operating system, primarily consists of various network card driver modules, responsible for initializing network card chips, establishing and starting data structures for read and write queues, and so on. The NET IO MANAGER module mainly oversees the management of read-write data for each network card driver, reallocates bandwidth as needed and provides corresponding configuration interfaces to the NET CM module. The NET CM module cooperates with the NET IO MANAGER module to provide corresponding configuration interfaces for upper layers to configure different network card devices.

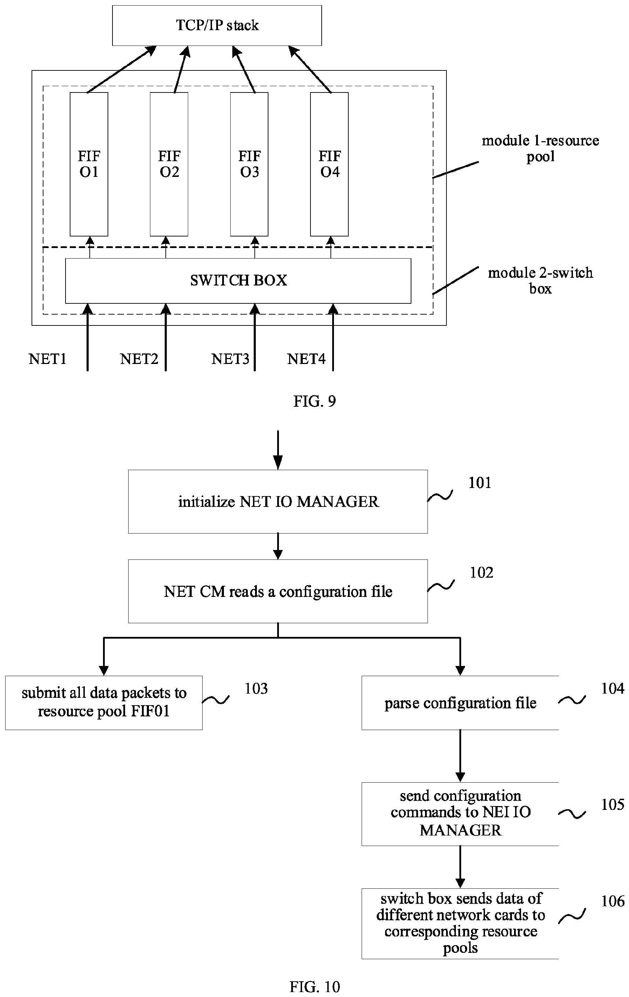

Further, as shown in FIG. 9, which is a schematic diagram of a network IO manager module according to an embodiment of the present disclosure, the NET IO MANAGEER mainly consists of two modules: a resource pool module and a switch box module. Module 1 resource pool module: There may be a plurality of resource pools, and the resource pool includes, but not limited to, a FIFO resource pool, representing IO queues with different transmission priorities. In this embodiment of the present disclosure, 4 FIFOs are provided. FIFO1 has the highest transmission priority, which has priority in scheduling the transmission of data packets located within it to a Transmission Control Protocol/Internet Protocol (TCP/IP) stack. The transmission priorities of FIFO2 to FIFO4 decrease sequentially. Module 2: The switch box module is primarily configured to connect Receive/Transmit (RX/TX) queues of network cards NET1 to NET4, i.e., the first to fourth peripheral network ports, with resource pool queues of corresponding transmission priorities. This allows the read-write data from the network cards to directly enter the FIFO resource pools of corresponding transmission priorities.

In addition, in this embodiment of the present disclosure, the NET CM module is connected to the NET IO MANAGEER module to complete the configuration of the NET IO MANAGEER module. The NET CM module consists of two parts: NET CM main program, which is the core of NET CM, primarily configured to read user configuration information, and acquire the number of resource pool FIFOs, weight information, etc., acquire configuration information of the switch box, and after obtaining the above information, convert the information into a special command and send the same to the NET IO MANAGEER module; NET CM configuration file, which includes the number information of the resource pool FIFOs, the weight information of the resource pool FIFOs, the configuration information of the switch box, and the corresponding relationship between the network cards and the FIFO resource pools.

Based on the structure of the transmission device and the structure of the network IO manager module in the above embodiments, FIG. 10 illustrates an overall flowchart of a transmission optimization method according to another embodiment of the present disclosure. At a step 101, after the system is powered on, the NET IO MANAGER module is initialized, mainly including the establishment of resource pools FIFO1-FIFO4, the initialization of a default switch box module, and the initialization of resources related to network cards. At a step 102, the NET CM module is initialized, mainly including resource establishment for its own module, reading of configuration file information, and acquisition of a user switch box configuration information table. At a step 103, in response to failing to read the information, it indicates that there is no need to modify the default configuration and that there is no requirement for network card scheduling priorities, that is, network port priorities, so data packets of all the network cards are submitted to the resource pool FITO1. At a step 104, in response to successfully reading the information, it is determined that the default configuration needs to be modified and there is a requirement for network card scheduling priorities. At a step 105, configuration file information is parsed, and corresponding configuration commands are sent to the NET IO MANAGER module according to the configuration information. At a step 106, according to the obtained configuration, the NET IO MANAGER module submits the data packets of different network cards to the resource pool FITO1 or resource pools FIFO2-FIFO4. Through the above process, the cooperation between the NET CM module, the NET IO MANAGER module, and the switch box module is completed, enabling the setting and scheduling of priorities for different network cards and meeting various real-time requirements in the industrial field.

Based on the above transmission optimization method, embodiments of a controller and a computer-readable storage medium of the present disclosure are presented below.

An embodiment of the present disclosure provides a controller, including: a processor, a memory, and a computer program stored in the memory and operable on the processor.

The processor and the memory may be connected by a bus or by other means.

It should be noted that the controller in this embodiment may include the processor and the memory as shown in the embodiment of FIG. 1. They belong to the same concept, so both of them have the same implementation principle and beneficial effects, which will not be repeated here.

The memory stores the non-transitory software program and instructions required for realizing the transmission optimization method in the above embodiment, which, when executed by the processor, implement the transmission optimization method in the above embodiment.

It is worth noting that since the controller in this embodiment of the present disclosure can implement the transmission optimization method in the above embodiment, one can refer to the implementation methods and technical effects of the transmission optimization method in any of the above embodiments for the implementation methods and technical effects of the controller in this embodiment of the present disclosure.

Further, an embodiment of the present disclosure provides a computer-readable storage medium storing computer-executable instructions which, when executed by a processor or controller, for example, by the processor in the above embodiment of the controller, may cause the processor to implement the transmission optimization method in any of the above embodiments, for example, to execute the above-described steps S200 to S230 in FIG. 2, S300 in FIG. 3, S400 in FIG. 4, S500 in FIG. 5, S600 to S610 in FIG. 6, or S101 to S106 in FIG. 10.

In this embodiment of the present disclosure, a transmission device includes a plurality of peripheral network ports. The transmission device is configured to acquire and parse a user configuration file to obtain user configuration requirements; generate a plurality of resource pools according to the user configuration requirements, where each resource pool is assigned a corresponding weight parameter; set a network port priority corresponding to each of the peripheral network ports according to the user configuration requirements; and connect each of the peripheral network ports to a target resource pool according to the user configuration requirements, such that the weight parameters of the target resource pools are in one-to-one correspondence with the network port priorities of the peripheral network ports. Different devices are connected to the transmission device through different peripheral network ports. Some devices, connected via certain network ports, require more data transmission time and lower latency, while others have less stringent requirements regarding transmission time and latency. Based on user requirements, a user configuration file is generated. By acquiring and parsing the user configuration file, user configuration requirements are obtained, and a plurality of resource pools are generated according to the user configuration requirements. Each resource pool is assigned corresponding weight parameters, i.e., each resource pool has a specific transmission priority, and higher-priority resource pools have more transmission time and lower latency. Similarly, a network port priority corresponding to each of the peripheral network ports is set according to the user configuration requirements. Each peripheral network port is connected to a target resource pool according to the user configuration requirements, and the weight parameters of the target resource pools are in one-to-one correspondence with the network port priorities. Thus, peripheral network ports corresponding to devices requiring more transmission time and lower latency are connected to higher-priority resource pools, and peripheral network ports corresponding to devices with less demanding requirements are connected to lower-priority resource pools. This approach improves the transmission efficiency, accurately controls the data transmission time and latency, and enhances the user experience.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to random access memory (RAM), read-only memory (ROM), electrically erasable programmable read-only memory (EEPROM), flash memory or other memory techniques, compact disc read-only memory (CD-ROM), digital versatile disk (DVD) or other optical disk storage, magnetic cassette, magnetic tape, magnetic disk storage or other magnetic storage devices, or any other medium that can be used to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and can include any information delivery media.

The above is a description of some embodiments of the present disclosure. However, the present disclosure is not limited to the above-mentioned embodiments. Those of ordinary skill in the art can also make various equivalent modifications or replacements without departing from the range of the present disclosure, and these equivalent modifications or replacements are all included in the scope defined by the claims of the present disclosure.

## Claims

1. A transmission optimization method, applied by a transmission device which comprises a plurality of peripheral network ports, and the method comprises:
acquiring and parsing a user configuration file to obtain user configuration requirements;
generating a plurality of resource pools according to the user configuration requirements, wherein each resource pool is assigned a corresponding weight parameter;
setting a network port priority corresponding to each of the plurality of peripheral network ports according to the user configuration requirements; and
connecting each of the plurality of peripheral network ports to a target resource pool according to the user configuration requirements, such that the weight parameters of the target resource pools are in one-to-one correspondence with the network port priorities of the plurality of peripheral network ports.

2. The transmission optimization method of claim 1, wherein the user configuration requirements comprise a target number of the resource pools, the weight parameter corresponding to each of the resource pools, and corresponding relationships between the resource pools and the plurality of peripheral network ports, and the corresponding relationship comprises the network port priority of each of the plurality of peripheral network ports.

3. The transmission optimization method of claim 2, wherein generating a plurality of resource pools according to the user configuration requirements comprises:
generating the plurality of resource pools according to the target number, and configuring each of the resource pools according to the weight parameter corresponding to each of the resource pools.

4. The transmission optimization method of claim 1, after acquiring and parsing a user configuration file, the method further comprising:
generating a preset number of resource pools in response to a parsing failure, wherein the weight parameters corresponding to each of the resource pools are identical.

5. The transmission optimization method of claim 4, further comprising:
in response to a parsing failure, setting identical network port priority for each of the plurality of peripheral network ports, and connecting each of the plurality of peripheral network ports to any one of the resource pools.

6. The transmission optimization method of claim 3 or 4, further comprising:
acquiring a total data transmission time for all of the resource pools; and
determining an exclusive data transmission time for each of the resource pools according to the weight parameters and the total data transmission time.

7. The transmission optimization method of claim 1, wherein the resource pool is a First in First out, FIFO, queue resource pool.

8. A transmission device, comprising:
a network manager module configured to acquire and parse a user configuration file to obtain user configuration requirements; and
a network input/output manager module configured to generate a plurality of resource pools according to the user configuration requirements, wherein each resource pool is assigned a corresponding weight parameter; set a network port priority corresponding to each of the plurality of peripheral network ports according to the user configuration requirements; and connect each of the plurality of peripheral network ports to a target resource pool according to the user configuration requirements, such that the weight parameters of the target resource pools are in one-to-one correspondence with the network port priorities of the plurality of peripheral network ports.

9. A controller, comprising: a memory, a processor, and a computer program stored in the memory and operable on the processor, wherein the processor, when executing the computer program, performs the transmission optimization method of any one of claims 1 to 7.

10. A computer-readable storage medium, storing computer-executable instructions configured to cause a computer to perform the transmission optimization method of any one of claims 1 to 7.
